# EUROPÄISCHE PATENTANMELDUNG

(11) **EP 2 277 650 A2**
(43) Veröffentlichungstag der Anmeldung: **26.01.2011**
(21) Anmeldenummer: 10007499.6
(22) Anmeldetag: 20.07.2010
(51) Int. Cl.: B23D 45/04, B23D 47/00, B23D 47/12, B28D 1/04, B28D 1/12

(54) **Spezialsäge**

(30) Priorität: 23.07.2009 AT 46609 U
(71) Anmelder: Braun Maschinenfabrik GmbH, 4840 Vöcklabruck (AT)
(72) Erfinder: Uebleis, Siegfried, 4840 Voeklabruck (AT); Sjoeholm, Jan, 26694 Munka Ljungby (SE)
(74) Vertreter: KLIMENT & HENHAPEL

(57) **Zusammenfassung**

Spezialsäge mit einem Sägekopf (4), der von einer mobilen Führungseinrichtung (1) maschinell gesteuert geführt ist, sowie einem am Sägekopf (4) schwenkbar angeordneten Sägearm (5), an dessen radialem Ende ein, mittels einer Antriebseinheit drehend angetriebenes Sägeblatt (6) befestigt ist. Erfindungsgemäß ist hierbei vorgesehen, dass der äußerste Umfangsbereich des Sägeblattes (6) zumindest eine aus einem Hartmetall gefertigte Schneidkante aufweist, und zwischen dem Sägeblatt (6) und der Antriebseinheit eine modular ausgeführte Getriebeeinheit angeordnet ist, wobei es sich bei der Getriebeeinheit um ein Untersetzungsgetriebe handelt. Die erfindungsgemäß Spezialsäge kann somit zum Sägen von Beton, Stahl und anderer Materialien eingesetzt werden, wobei die Lebensdauer der Sägeblätter (6) deutlich erhöht wird, insbesondere auch bei maschinell geführten, ferngesteuerten Spezialsägen.

## Beschreibung

Die Erfindung betrifft eine Spezialsäge mit einem Sägekopf, der von einer mobilen Führungseinrichtung maschinell gesteuert geführt ist, sowie einem am Sägekopf schwenkbar angeordneten Sägearm, an dessen radialem Ende ein, mittels einer Antriebseinheit drehend angetriebenes Sägeblatt befestigt ist, gemäß dem Oberbegriff von Anspruch 1.

Spezialsägen sind etwa aus der AU 5 486 665 zum Sägen von Stein, und aus der DE 20 02 603 zum Zuschneiden von Platten komplizierter Form bekannt.

Spezialsägen der gattungsgemäßen Art werden insbesondere für das Durchtrennen von armierten oder nicht armierten Betonkonstruktionen verwendet, und werden z.B. als Wandsägen im Hoch- und Tiefbau, bei Abbrucharbeiten, und insbesondere beim Rückbau von industriellen Anlagen wie etwa Kernkraftwerken, Ölplattformen, Brücken, usw. eingesetzt.

Herkömmliche Spezialsägen verwenden Sägeblätter, die in ihrem äußersten Umfangsbereich einzelne Segmente aufweisen, die jeweils eine diamantbeschichtete Schleiffläche aufweisen. Solche Spezialsägen sind zur Bearbeitung von Betonwänden gut geeignet, jedoch zeigt sich bei Stahlbeton, oder anderen, stahlhältigen Konstruktionen eine starke Abnutzung der Sägeblätter bzw. ein sehr langsamer Sägefortschritt, falls die Vorschubgeschwindigkeit nicht optimal in Abhängigkeit zur Umfangsgeschwindigkeit des Sägeblattes gewählt wird, oder sich der abgetragene Stahl mit den Diamantkörnern verbindet. Die Anmelderin hat nämlich festgestellt, dass die Verringerung der Schleifwirkung einerseits auf eine Abnutzung der Schleiffläche an sich zurückzuführen ist, aber auch auf Ablagerungen des abgetragenen Materials auf der Schleiffläche. Bei nahgesteuerten Spezialsägen kann bei entsprechender Erfahrung der Bedienperson, der die Geräusche und den Vortriebwiderstand des Sägeblattes zu deuten weiß, ein übermäßiger Verschleiß der Sägeblätter bzw. ein Polieren der Diamantsegmente aufgrund zu hoher Umfangsgeschwindigkeit hintan gehalten werden, indem die Vorschubgeschwindigkeit und die Umfangsgeschwindigkeit entsprechend optimiert werden.

Schwierigkeiten ergeben sich hingegen in Anwendungen, bei denen die Spezialsäge ferngesteuert werden muss, etwa weil der Einsatz von Bedienpersonen unmittelbar bei der Spezialsäge zu gefährlich wäre, z.B. in kontaminierten Bereichen von Kernkraftwerken, oder anderen Gesundheitsgefährdenden Bereichen. In diesen Fällen kann die Vorschubgeschwindigkeit mitunter nicht optimal gewählt werden, oder nicht rasch genug optimiert werden, sodass ein höherer Verschleiß in Kauf genommen werden muss.

Bei weichen Stählen ist ein Trennen mittels Diamantwerkzeugen überhaupt nahezu unmöglich, weil der Stahl die Diamantsegmente "zuschmiert" und daher keine Schneidkanten in Form der Diamantkörner mehr vorragen. Da es sich außerdem bei den auf solchen Spezialsägen, insbesondere Wandsägen, üblicherweise eingesetzten Diamantsägeblättern eigentlich um Schleifwerkzeuge mit undefinierter Schneidengeometrie handelt, kann auch keine kalkulierbare Zerspanleistung eingestellt werden.

Ziel der Erfindung ist es somit, die Lebensdauer der Sägeblätter von Spezialsägen und deren Sägeleistung zu erhöhen, insbesondere auch bei maschinell geführten, ferngesteuerten Spezialsägen. Dabei soll die erfindungsgemäße Spezialsäge neben dem Sägen von Beton insbesondere auch zur Bearbeitung von Stahlbeton, sowie anderer, stahlhältiger bzw. metallischer Konstruktionen einsetzbar sein. Des Weiteren soll eine Spezialsäge verwirklicht werden, deren Zerspanleistung auf den jeweiligen Anwendungsfall einstellbar ist.

Diese Ziele werden durch die Merkmale von Anspruch 1 erreicht. Anspruch 1 bezieht sich auf eine Spezialsäge mit einem Sägekopf, der von einer mobilen Führungseinrichtung maschinell gesteuert geführt ist, sowie einem am Sägekopf schwenkbar angeordneten Sägearm, an dessen radialem Ende ein, mittels einer Antriebseinheit drehend angetriebenes Sägeblatt befestigt ist. Erfindungsgemäß ist hierbei vorgesehen, dass der äußerste Umfangsbereich des Sägeblattes zumindest eine aus einem Hartmetall gefertigte Schneidkante aufweist, und zwischen dem Sägeblatt und der Antriebseinheit eine modular ausgeführte Getriebeeinheit angeordnet ist, wobei es sich bei der Getriebeeinheit um ein Untersetzungsgetriebe handelt. Es hat sich nämlich in zahlreichen Versuchen der Anmelderin erwiesen, dass bei der Bearbeitung von unterschiedlichen Werkstoffen wie Stahl und anderer Metalle, wie sie etwa beim Rückbau von Kernkraftwerken, Ölplattformen usw. auftreten, die Lebensdauer des Sägeblattes und die Sägeleistung erhöht werden können, indem der Umfangsbereich zumindest eine aus einem Hartmetall gefertigte Schneidkante aufweist. Unter Hartmetalle versteht man gesinterte Carbidhartmetalle, die sich durch eine sehr hohe Härte, Verschleißfestigkeit und besonders hohe Warmhärte auszeichnen. Hartmetalle bestehen dabei zumeist aus 90-94% Wolframcarbid als Verstärkungsphase, und 6-10% Kobalt als Matrix, wobei die Zusammensetzung für das jeweilige Anwendungsgebiet der erfindungsgemäßen Spezialsäge optimiert werden kann, etwa auch durch Dotierung mit zusätzlichen Elementen. Die erfindungsgemäße Spezialsäge unterliegt geringeren Verschleißerscheinungen als herkömmliche Spezialsägen, und erweist sich somit auch bei wechselnden Betriebsbedingungen wie Vorschubgeschwindigkeit, Eindringtiefe des Sägeblattes und Werkstoffzusammensetzung des zu trennenden Materials als sehr robust, sodass sie sich vortrefflich auch für einen ferngesteuerten Einsatz eignet, bei dem Betriebsbedingungen dieser Art mitunter nicht immer präzise berücksichtigt werden können.

Um die erfindungsgemäße Spezialsäge je nach Anforderung rasch auf unterschiedliche Umfangsgeschwindigkeiten des Sägeblattes, Drehmomente und Leistungen anpassen zu können, ist des Weiteren vorgesehen, dass zwischen dem Sägeblatt und der Antriebseinheit eine modular ausgeführte Getriebeeinheit angeordnet ist. Durch die modulare Ausführungsform ist die Getriebeeinheit somit leicht austauschbar, und die erfindungsgemäße Spezialsäge kann einfacher umgerüstet werden.

Des Weiteren wird erfindungsgemäß vorgeschlagen, dass es sich bei der Getriebeeinheit um ein Untersetzungsgetriebe handelt, weil bei einer erfindungsgemäßen Spezialsäge in Versuchen festgestellt wurde, dass im Vergleich zu herkömmlichen Spezialsägen niedrigere Umfangsgeschwindigkeiten des Sägeblattes bei gleichzeitig höheren Drehmomenten praktikabel sind. Damit aber bei Verringerung der Umfangsgeschwindigkeit nicht zu viel Antriebsleistung verloren geht, hat sich die Verwendung eines Untersetzungsgetriebes als vorteilhaft erwiesen.

Auch die Motoren können mit Schnellverschlüssen als Modul am Sägekopf aufgebaut sein, sodass innerhalb weniger Minuten für den jeweiligen Einsatzfall und Werkzeugtyp geeignete Antriebsmotoren, vorzugsweise Hydraulikmotoren und Elektromotoren mit unterschiedlichen Nenndrehzahlen und Drehmomenten, montiert werden können.

Bei einer erfindungsgemäßen Spezialsäge kann des Weiteren die Schneidengeometrie exakt definiert werden, und die Zerspanleistung ist aufgrund der Anzahl der Zähne, der Umfangsgeschwindigkeit und der wählbaren Vorschubgeschwindigkeit pro Zahn absolut einstellbar und kalkulierbar. Außerdem kann die Schneidengeometrie exakt auf das zu sägende Material abgestimmt werden. Im Gegensatz zum Diamantschleifkorn können Sägeblätter gemäß der Erfindung auch nachgeschärft oder umgeschliffen werden, wenn es der zu sägende Werkstoff erfordert.

Die Führungseinrichtung dient nicht nur zur Führung des Sägeblattes, sondern auch als Widerlager für den Anpressdruck sowie das Drehmoment des Sägeblattes, und kann etwa als Führungsschiene ausgeführt sein, auf der der Sägekopf gleitet. Die Führungsschiene wird dabei über Schienenfüße temporär an einer zu bearbeitenden Konstruktion befestigt, und nach Abschluss der Sägearbeiten wieder abgenommen, um an anderer Stelle wieder montiert zu werden. Insofern ist eine Mobilität der Führungseinrichtung gegeben. Die Führungseinrichtung kann aber auch als Roboterarm, Kran und dergleichen ausgeführt sein. Wesentlich ist jedenfalls, dass die Führungseinrichtung mobil ist, also örtlich ungebunden, sodass die erfindungsgemäße Spezialsäge auch in schwer zugänglichen Bereichen eingesetzt werden kann, vorzugsweise auch ferngesteuert.

Gemäß einer weiteren, vorteilhaften Ausführungsform der Erfindung kann Titancarbid oder Schnellarbeitsstahl als Hartmetall der Schneidkante vorgesehen sein. Schnellarbeitsstahl, vor allem bekannt durch die vom englischen Namen *High Speed Steel* abgeleitete Bezeichnung HSS (Kürzel nach EN ISO 4957 HS), bezeichnet eine Gruppe legierter Werkzeugstähle mit bis zu 2,06 % Kohlenstoffgehalt und bis zu 30 % Anteil an Legierungselementen wie Wolfram, Molybdän, Vanadium, Kobalt, Nickel und Titan. HS-Werkstoffe zeichnen sich durch große Härte, Anlassbeständigkeit, Verschleißfestigkeit und eine Warmfestigkeit bis 600 °C aus.

Schließlich wird vorgeschlagen, dass die Getriebeeinheit eine Umfangsgeschwindigkeit des Sägeblattes von 0.5-8 m/s sicherstellt.

Die Erfindung wird im Folgenden anhand eines Ausführungsbeispiels mithilfe der beiliegenden Figuren näher erläutert. Es zeigen hierbei die
Fig. 1 eine Ausführungsform einer erfindungsgemäßen Spezialsäge in einer Vorderansicht, bei der die Führungseinrichtung als Führungsschiene ausgeführt ist, und die
Fig. 2 die Ausführungsform einer erfindungsgemäßen Spezialsäge gemäß der Fig. 1 in einer Seitenansicht.

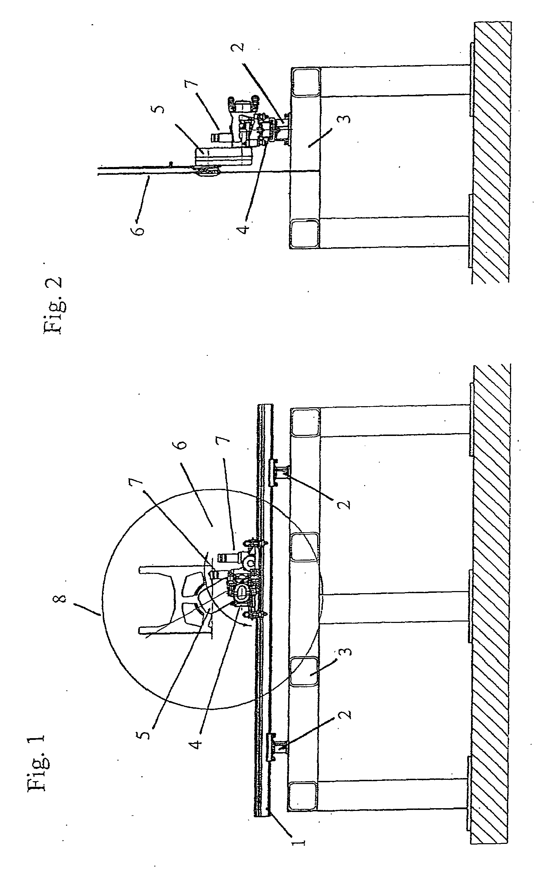

Die gezeigte Ausführungsform gemäß Fig. 1 weist eine Führungsschiene 1 auf, die über Schienenfüße 2 an einer zu bearbeitenden Konstruktion 3 befestigt ist. Als Befestigungsarten können .mechanische Befestigungen über Schrauben und dergleichen verwendet werden, magnetische Befestigungssysteme, oder auch Befestigungen mithilfe von Unterdruck. Dabei wird aber die Führungsschiene 1 stets nur temporär an der zu bearbeitenden Struktur befestigt, und dient als Widerlager für die Aufnahme von Anpressdruck und Drehmoment der Spezialsäge während des Bearbeitungsvorganges. Falls die erfindungsgemäße Spezialsäge unter gefährlichen Arbeitsbedingungen wie etwa beim Rückbau von Kernkraftwerken, oder auch unter Wasser, wie etwa beim Rückbau von Ölplattformen eingesetzt werden soll, empfiehlt sich auch die Verwendung von Spezialkränen, Roboterarmen und dergleichen als Führungseinrichtung 1. Auf der Führungsschiene 1 ist eine Sägekopf 4 gleitend gelagert, etwa mithilfe eines Schlittens, oder mithilfe von Laufrollen an der Auflageseite des Sägekopfes 4. Am Sägekopf 4 ist ein Sägearm 5 schwenkbar angeordnet, der an seinem radialen Ende ein Sägeblatt 6 trägt. Das Sägeblatt 6 wird von einer Antriebseinheit in Drehung versetzt, die am Sägekopf 4, oder am Sägearm 5 angeordnet sein kann. Dieselbe Antriebseinheit kann auch den Sägekopf 4 entlang der Führungsschiene 1 bewegen, oder es ist ein separater Antrieb hierfür vorgesehen. Zwischen der Antriebseinheit und dem Sägeblatt 6 ist eine modular ausgeführte Getriebeeinheit angeordnet (in den Fig. 1 und 2 nicht ersichtlich), die als Untersetzungsgetriebe ausgeführt ist. Hydraulikanschlüsse 7 dienen zur Verbindungserstellung zwischen dem Sägekopf 4 und externen Antriebsaggregaten. Die Ansteuerung der erfindungsgemäßen Spezialsäge erfolgt vorzugsweise über externe Bedieneinheiten. Des Weiteren kann ein Sägeblattschutzhalter mit Anschlüssen für eine Spülwasserzuführung vorgesehen sein (in den Fig. 1 und 2 nicht ersichtlich).

Zur Bearbeitung der Konstruktion 3 wird zunächst das Sägeblatt 6 in Rotation versetzt, und der Sägearm 5 in Pfeilrichtung verschwenkt. Das Sägeblatt 6 dringt in weiterer Folge in die zu bearbeitende Konstruktion 3 ein und trennt es. Die Eindringtiefe kann dabei variabel gewählt werden. In der Praxis kann etwa so vorgegangen werden, dass zunächst lediglich ein Einschnitt gesetzt wird, der nach Wechsel des Sägeblattes 6 als Führungsspur für das neue Sägeblatt 6 dient, das erst die endgültige Trennung durchführt. Die Verfahrensweise bei der Schnittsetzung wird jedoch je nach Anforderung vom Fachmann entsprechend gewählt werden.

Im Unterschied zu herkömmlichen Spezialsägen, wo die Umfangsgeschwindigkeiten des Sägeblattes bei Durchmessern von 600 bis etwa 2000 mm jeweils bis zu 60 m/s betragen, werden die Umfangsgeschwindigkeiten des Sägeblattes 6 bei einer erfindungsgemäßen Spezialsäge hingegen geringer gewählt, etwa im Bereich von 0.5-8 m/s bei vergleichbaren Durchmessern. Bei einem Durchmesser von 1.20m sind bei hochlegiertem Stahl etwa Umfangsgeschwindigkeiten von 1 m/s vorteilhaft. Um einerseits die Antriebsleistung nicht zu sehr zu verringern, und andererseits auch herkömmliche Sägeköpfe für den Bau erfindungsgemäßer Spezialsägen verwenden zu können, empfiehlt sich dabei die Wahl eines Untersetzungsgetriebes als Getriebeeinheit und/oder Tauschmotore.

Erfindungsgemäß weist der äußerste Umfangsbereich 8 des Sägeblattes 6 zumindest eine aus einem Hartmetall gefertigte Schneidkante auf, etwa unter Verwendung von Titancarbid oder Schnellarbeitsstahl (HSS). Die Schneidkante kann dabei als einzelne Schneidkante umfangsgeschlossen ausgeführt sein, oder auch in einzelnen Segmenten, die etwa V-förmige Schneidkanten tragen. Dabei kann die Verwendung von Hartmetall entweder lediglich für die Schneidkante erfolgen, oder zur Fertigung des gesamten Sägeblattes 6. Im letzteren Fall empfiehlt sich insbesondere Titancarbid aufgrund seines geringen Gewichts, um das Gesamtgewicht des Sägeblattes 6 möglichst gering zu halten.

Schließlich kann vorgesehen sein, dass der Sägekopf 4 mit einer an sich bekannten Laser-, Plasma- oder Wasserstrahlschneidvorrichtung ausgestattet ist, um für jegliche Anforderungen gerüstet zu sein. Wie bereits erwähnt wurde, soll die erfindungsgemäße Spezialsäge insbesondere auch unter gefährlichen und widrigen Arbeitsbedingungen einsetzbar sein, die mitunter auch schwer zugänglich sind. Ein oftmaliges Verlassen und Eintreten in diese Arbeitsbereiche wäre dabei sehr hinderlich, sodass die erfindungsgemäße Spezialsäge bereits mit diesen Spezialschneidgeräten ausgestattet werden kann.

Die erfindungsgemäße Spezialsäge kann des Weiteren mit einer programmierbaren Steuerung ausgestattet werden, mit der die maßgeblichen Parameter der Säge, wie etwa Umfangsgeschwindigkeit, Vorschubgeschwindigkeit, Vorschub- und Schwenkbewegungen, sowie die Verfahrwege und deren Abfolge, entsprechend der jeweiligen Sägesituation vorprogrammiert werden können. Damit kann die Spezialsäge den gesamten Sägevorgang selbständig und automatisch durchführen, was bei extremen Umweltbedingungen, wie zum Beispiel im kontaminierten Bereich von Kernkraftwerken, erhebliche Vorteile bringt.

Die erfindungsgemäß Spezialsäge kann zum Sägen von Beton, Stahl und anderer Materialien eingesetzt werden, und eignet sich somit insbesondere für den Rückbau von Kernkraftwerken, Ölplattformen, Brücken, oder Industrieanlagen, sowie für den Bau, Umbau oder Abbruch von großen Maschinen und Anlagen wie etwa Schiffen, Schleusenanlagen und dergleichen. Mithilfe einer erfindungsgemäßen Spezialsäge können dabei die Lebensdauer der Sägeblätter 6 erhöht, die Sägezeit verkürzt und die Kosten erheblich verringert werden, insbesondere auch bei maschinell geführten, ferngesteuerten Spezialsägen. Des Weiteren hat sich herausgestellt, dass manche Materialien aufgrund ihrer physikalischen Eigenschaften, oder manche Konstruktionen aufgrund ihrer Form, Größe, Einbausituation, oder der speziellen Umgebungsbedingungen überhaupt nur mit einer erfindungsgemäßen Spezialsäge wirtschaftlich getrennt werden können.

## Patentansprüche

1. Spezialsäge mit einem Sägekopf (4), der von einer mobilen Führungseinrichtung (1) maschinell gesteuert geführt ist, sowie einem am Sägekopf (4) schwenkbar angeordneten Sägearm (5), an dessen radialem Ende ein, mittels einer Antriebseinheit drehend angetriebenes Sägeblatt (6) befestigt ist, **dadurch gekennzeichnet, dass** der äußerste Umfangsbereich des Sägeblattes (6) zumindest eine aus einem Hartmetall gefertigte Schneidkante aufweist, und zwischen dem Sägeblatt (6) und der Antriebseinheit eine modular ausgeführte Getriebeeinheit angeordnet ist, wobei es sich bei der Getriebeeinheit um ein Untersetzungsgetriebe handelt.

2. Spezialsäge nach Anspruch 1, **dadurch gekennzeichnet, dass** die Antriebseinheit modular ausgeführt ist, und mithilfe von Schnellverschlüssen am Sägekopf (4) angeordnet ist.

3. Spezialsäge nach Anspruch 1 oder 2, **dadurch gekennzeichnet, dass** es sich bei dem Hartmetall um Titancarbid handelt.

4. Spezialsäge nach Anspruch 1 oder 2, **dadurch gekennzeichnet, dass** es sich bei dem Hartmetall um einen Schnellarbeitsstahl (HSS) handelt.

5. Spezialsäge nach einem der Ansprüche 1 bis 4, **dadurch gekennzeichnet, dass** die Getriebeeinheit eine Umfangsgeschwindigkeit des Sägeblattes (6) von 0.5-8 m/s sicherstellt.
